# EUROPÄISCHE PATENTSCHRIFT

(11) **EP 2 955 824 B1**
(45) Veröffentlichungstag und Bekanntmachung des Hinweises auf die Patenterteilung: **31.05.2017**
(21) Anmeldenummer: 14171949.2
(22) Anmeldetag: 11.06.2014
(51) Int. Cl.: H02K 41/03, H02K 1/17

(54) **Sekundärteil eines Synchronmotors mit einer Schutzvorrichtung für Magnete**
Secondary part of a synchronous motor with a protective device for magnets
Élément secondaire d'un moteur synchrone doté d'un dispositif de protection pour aimants

(43) Veröffentlichungstag der Anmeldung: 16.12.2015
(73) Patentinhaber: ETEL S.A., 2112 Môtiers (CH)
(72) Erfinder: Fernandes Goncalves, José Manuel, 2013 Colombier (CH); Grillon, Jean-Yves, 25300 Granges-Narboz (FR)
(74) Vertreter: Pleyer, Hans Anno

(56) Entgegenhaltungen:
- US-A1- 2014 062 223
- US-B2- 6 882 065

## Beschreibung

### GEBIET DER TECHNIK

Die vorliegende Erfindung betrifft ein Sekundärteil eines Synchronmotors mit einer Schutzvorrichtung für Magnete. Solche Schutzvorrichtungen dienen dazu, die Magnete der Magnetbahn eines Synchronmotors vor Beschädigungen durch äußere Einflüsse zu schützen.

### STAND DER TECHNIK

Synchronmotoren, bestehend aus einem Primärteil mit Spulen und einem Sekundärteil mit Permanentmagneten sind seit langem bekannt. So sind in der US 5642013 Synchronmotoren beschrieben, bei denen Magnete in regelmäßigen Abständen und mit wechselnder Polarität auf einer Magnetbahn angeordnet sind. Dieser Magnetbahn gegenüber liegt ein Primärteil, auf dessen Zähne Spulen gewickelt sind. Bei einer geeigneten Bestromung der Spulen lässt sich zwischen dem Primär- und dem Sekundärteil eine Kraft erzeugen, die den Synchronmotor antreibt. Die Magnetbahnen können dabei auf der Mantelfläche eines Zylinders angeordnet sein, um einen rotatorischen Motor zu bilden, oder entlang einer Geraden, um einen Linearmotor zu bilden. Die Magnetbahnen können auch entlang gekrümmter Bahnen verlaufen, um etwa in einem Transportsystem bewegliche Wagen mit einem integrierten Primärteil entlang beliebiger Bahnen zu bewegen.

Die Magnetbahnen von solchen Synchronmotoren sind sehr empfindlich. Die Magnete können korrodieren, z.B. wenn Sie mit Flüssigkeiten in Kontakt kommen. Außerdem sind sie anfällig für mechanische Beschädigungen. Dies ist vor allem in Werkzeugmaschinen ein Problem, wo ferromagnetische Partikel in großen Mengen anfallen, die von den Magneten angezogen werden und den Luftspalt zwischen dem Primär- und dem Sekundärteil des Motors blockieren können.

So ist es z.B. aus der US 5952742 bekannt, die Magnetbahn eines Linearmotors mit einem metallischen Band abzudecken. Die Magnete sind hier zusätzlich von einem seitlichen Rahmen umgeben, so dass sie von allen Seiten her geschützt sind.

Aus der US 6882065 B2 sind Abdeckleisten bekannt, die beidseits der Magnetbahn eines Linearmotors angeordnet sind. Sie schützen die Magnete seitlich gegen schädliche Einflüsse. Auf ihrer Oberseite weisen diese Abdeckleisten einen Steg auf, dessen Höhe der Dicke eines Abdeckblechs entspricht. Die Stege zweier sich gegenüber liegenden Abdeckleisten bilden so einen Kanal, der das Abdeckblech zum Abdecken der Magnete aufnimmt und führt. Die Montage des Bleches ist so relativ einfach möglich. Ein ferromagnetisches Blech wird durch die Anziehungskraft der Magnete an Ort und Stelle gehalten und muss nicht zusätzlich befestigt werden.

Die JP 2009038869 A offenbart Abstandshalter, die zwischen den Magneten einer Magnetbahn angeordnet sind. Diese Abstandshalter verhindern einen direkten Kontakt der Magnete untereinander. Sie tragen auch ein Abdeckblech, das dank der Abstandshalter nicht unmittelbar mit den Magneten in Kontakt steht. Kräfte auf das Abdeckblech wirken so nicht auf die Magnete ein.

Das Dokument US2014/0062223 offenbart einen Lineargenerator, der einen Läufer mit Magneten aufweist. In diesem Läufer wird ein magnetischer Steg in einen Spalt zwischen benachbarte Magnete eingesetzt.

### ZUSAMMENFASSUNG DER ERFINDUNG

Aufgabe der Erfindung ist es, den Schutz der Magnete eines Sekundärteils eines Synchronmotors weiter zu vereinfachen und kostengünstig auszuführen.

Diese Aufgabe wird gelöst durch eine Vorrichtung gemäß Anspruch 1. Vorteilhafte Details dieser Vorrichtung und deren vorteilhafte Verwendung ergeben sich auch aus den von Anspruch 1 abhängigen Ansprüchen.

Es wird ein Sekundärteil eines Synchronmotors mit einer Schutzvorrichtung für Magnete offenbart. Das Sekundärteil weist mehrere in regelmäßigen Abständen auf einem Magnetträger angeordnete Magnete auf. Die Schutzvorrichtung weist einen Steg zum Einsetzen in einen Spalt zwischen benachbarten Magneten auf. Der Steg weist einen ersten und zweiten Flansch an seinen beiden Enden auf, so dass der Steg und die Flansche eine Doppel-T-Struktur bilden, und sich die Flansche an Außenkanten der benachbarten Magnete legen.

Die hier beschriebene Schutzvorrichtung ist einfach und kostengünstig herzustellen, und kann vor Ort beim Kunden einfach montiert, gewartet oder ersetzt werden. Sie stabilisiert die Magnetanordnung, schützt die oft recht spröden Magnete vor der Einwirkung seitlicher Kräfte und vor dem Eindringen von Schmutz. Sie bietet außerdem sicheren Halt für eine Abdeckung. Dank ihrer Ausgestaltung kann die Schutzeinrichtung für einen großen Bereich an Formen des Spaltes zwischen zwei Magneten eingesetzt werden, so dass weniger speziell angefertigte Bauteile benötigt werden. Die Schutzeinrichtung ist sowohl für Linearmotoren mit geraden oder gekrümmten Bahnen geeignet, als auch für rotatorische Motoren.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigen die
- Figur 1: eine Schutzvorrichtung für die Magnete eines Synchronmotors,
- Figuren 2 - 5: verschiedene Einbausituationen der Schutzvorrichtung,
- Figur 6: eine Detailansicht von überlappenden Schutzvorrichtungen,
- Figur 7: einen Querschnitt durch eine Schutzvorrichtung,
- Figur 8: eine spezielle Schutzvorrichtung für den letzten Magnet einer Magnetbahn.

### BESCHREIBUNG DER AUSFÜHRUNGSFORMEN

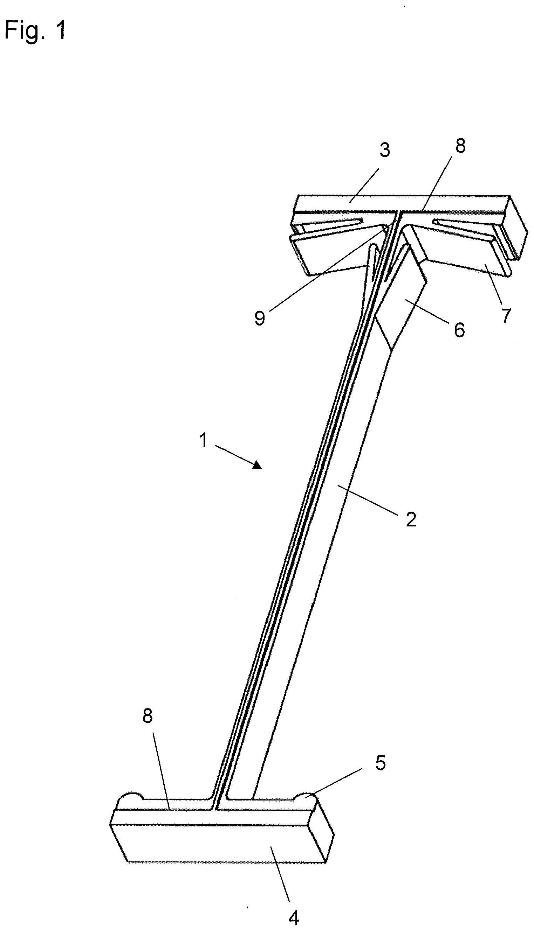

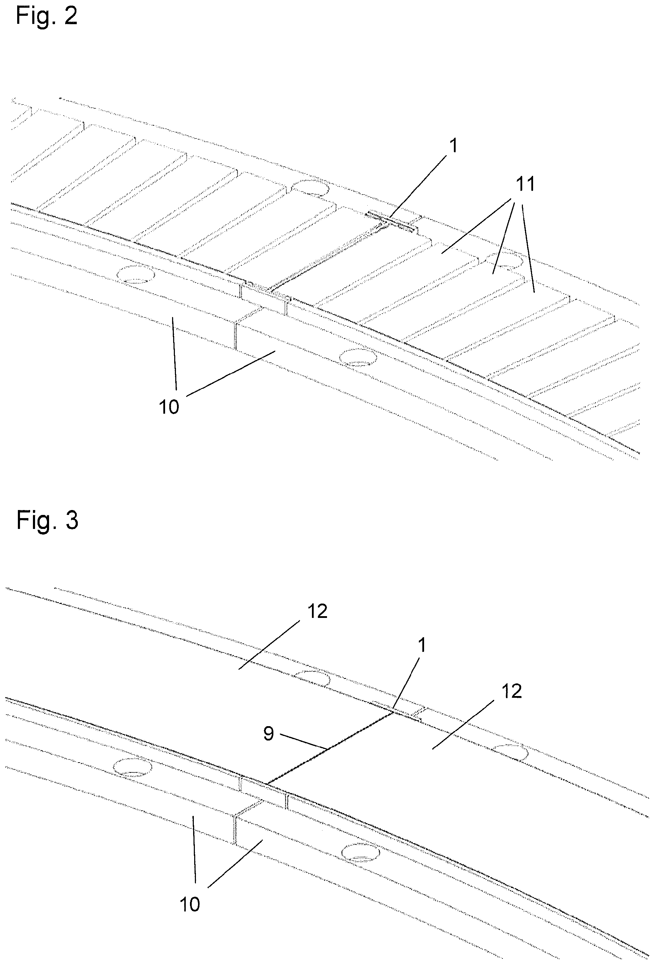

Die Figur 1 zeigt eine Schutzvorrichtung 1 für die Magnetbahn eines Synchronmotors, die Figur 2 zeigt diese Schutzvorrichtung 1 in einer typischen Einbausituation in einem Linearmotor. Diese als Spritzgussteil günstig herstellbare Schutzvorrichtung in Form einer Doppel-T-Struktur wird zwischen die Magnete 11 eingesetzt, die auf einem Magnetträger 10 angeordnet die Magnetbahn des Linearmotors bilden.

Die Schutzvorrichtung 1 weist einen Steg 2 auf, der in den Spalt zwischen zwei Magnete 11 eingesetzt wird. An den beiden Enden des Steges 2 befinden sich beidseits des Steges 2 rechtwinklig abstehend zwei Flansche 3, 4. Diese Flansche legen sich an die beidseits der Magnetbahn frei liegenden Außenkanten der Magnete 11 an.

Am Steg 2 angeformt finden sich erste Federelemente 6, deren Aufgabe es ist, den Steg 2 im Spalt zwischen zwei Magneten 11 zu zentrieren. Auf diese Weise kann die Schutzvorrichtung 1 in Magnetbahnen verwendet werden, deren Magnete 11 unterschiedliche Abstände aufweisen, bei denen der Spalt zwischen zwei Magneten 11 also unterschiedlich groß ist. Dies gilt auch, wenn die Magnetbahn in ihrer Ebene gekrümmt ist, der Spalt zwischen den Magneten 11 also V-förmig ausgebildet ist. Der Steg 2 muss dann so dünn sein, dass er an der schmalsten Stelle (also am inneren Radius einer gekrümmten Magnetbahn) zwischen die Magnete 11 passt, in den breiteren Bereichen des Spaltes zentrieren dann die ersten Federelemente 6 den Steg.

Auf diese Weise kann mit einer Schutzvorrichtung 1 ein weiter Bereich von Krümmungsradien der Magnetbahnen abgedeckt werden. Auch Toleranzen bei der Platzierung der Magnete 11 oder bei deren Abmessung können ausgeglichen werden. Durch die Kompression der Magnete 11 wird außerdem deren Stabilität gesteigert.

Die Funktion der ersten Federelemente 6 kann alternativ auch vom Steg 2 selbst übernommen werden, wenn er aus einem elastischen, komprimierbaren Material besteht, und dadurch selbst zum Federelement wird.

Für Schutzelemente 1, die in Linearmotoren ohne Krümmung in der Magnetbahn zum Einsatz kommen, können zusätzliche Federelemente 6 nützlich sein, die entlang des Steges 2 verteilt sind.

Der erste Flansch 3 weist an seiner der Außenkante der Magnete 11 zugewandten Seite zweite Federelemente 7 auf. Diese zweiten Federelemente 7 sorgen für einen sicheren Halt der Schutzvorrichtung 1 an den Magneten 11 und gleichen kleine Schwankungen in den Abmessungen der Magnete 11 quer zur Magnetbahnrichtung aus.

Am zweiten Flansch 4 sind Vorsprünge 5 angeformt, die den Außenkanten der Magnete 11 zugewandt sind. Diese Vorsprünge 5 sorgen für einen definierten Kontakt zwischen dem zweiten Flansch 4 und den Magneten 11, der insbesondere unabhängig vom Krümmungsradius der Magnetbahn ist.

Erster und zweiter Flansch 3, 4 weisen jeweils eine Kante 8 auf, die zusammen einen Kanal zur Aufnahme einer Abdeckung dienen, wie sie aus dem Stand der Technik bekannt ist, und wie sie in den Figuren 3, 5 und 7 noch gezeigt werden wird. Die Kante 8 ist jeweils so ausgebildet, dass die Schutzvorrichtung 1 auf der den Magneten 11 zugewandten Seite der Kante 8 niedriger ausgebildet ist als jenseits der Kante 8. Die Abdeckung wird so geführt, und Verletzungen an scharfen Kanten der Abdeckung werden vermieden.

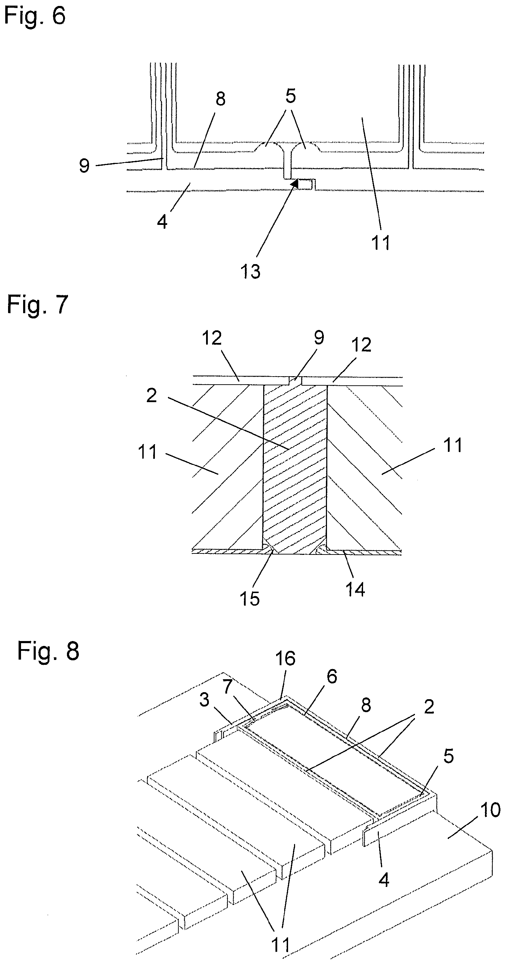

Schließlich ist auf der Oberseite des Steges 2 ein Grat 9 angeformt, der für einen definierten Anschlag für den Stoß zweier Abdeckungen der Magnetbahn sorgt. Dies ist weiter unten im Zusammenhang mit der Figur 7 nochmals genauer dargestellt.

In der Figur 2 ist dargestellt, dass eine Schutzvorrichtung zwischen zwei Magneten 11 angeordnet ist, die beidseits einer Stoßstelle sitzen, an der zwei Magnetträger 10 aneinander stoßen. Die Magnete 11 sind ansonsten mit einer aus dem Stand der Technik bekannten seitlich angeordneten Abdeckleiste geschützt.

In der Figur 3 sind die Magnete 11 dann mit einer Abdeckung 12 abgedeckt, etwa mit einem dünnen, ferromagnetischen Blech, das durch die Anziehungskraft der Magnete 11 festgehalten wird. Der Grat 9 der Schutzvorrichtung 1 ist zwischen den beiden Abdeckungen zu erkennen.

Ist die Schutzvorrichtung 1 aus einem kompressiblen Material gefertigt, kann sie etwas höher als die Magnete 11 ausgebildet sein. Durch die Kraft, mit der die Abdeckung 12 zu den Magneten 11 gezogen wird, wird die Schutzvorrichtung 1 dann auf die richtige, den Magneten 11 entsprechende Höhe komprimiert.

In den Figuren 2 und 3 ist eine leichte Krümmung der Magnetbahn in der Ebene der Magnetbahn zu erkennen, die zu einer V-förmigen Ausbildung des Spalts zwischen zwei Magneten 11 führt, wie oben beschrieben.

Die Magnetbahn kann aber auch wie bei einem rotatorischen Synchronmotor gekrümmt sein, wo die Magnete 11 auf der Innen- oder Außenseite eines Zylinders angeordnet sind. Auch hier entstehen V-förmige Spalte zwischen den Magneten, wobei der Abstand zwischen den Magneten 11 nun senkrecht zur Ebene der Magnetbahn variiert. Auch in solche Spalte lässt ich die Schutzvorrichtung einsetzen, wenn sie aus einem ausreichend kompressiblen Material gefertigt ist.

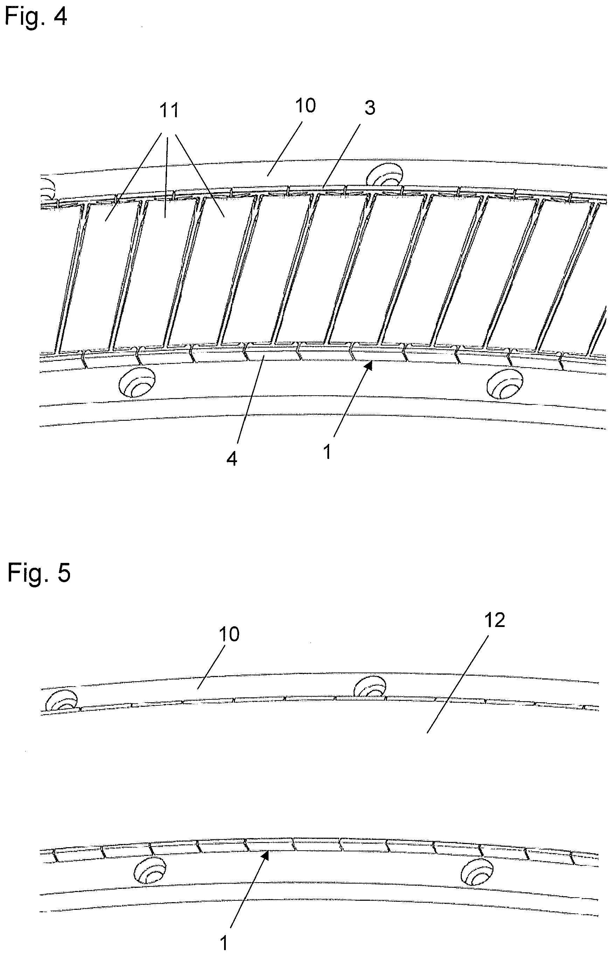

Die Figur 4 zeigt eine Magnetbahn, bei der zwischen allen Magneten 11 eine Schutzvorrichtung eingesetzt ist. Durch die aneinander stoßenden Flansche 3, 4 entsteht ein durchgehender, seitlicher Schutz für die Magnete 11. Eine separate Montage so eines Schutzes wie im Stand der Technik ist damit nicht mehr nötig. Dank der Kanten 8 auf den Flanschen 3, 4 ist auch ein Kanal gebildet, in das die Abdeckung 12 eingelegt werden kann, wie in der Figur 5 dargestellt. Der Grat 9, der als Stoßstelle zwischen zwei Abdeckungen 12 dient, ist in dieser Anordnung nur dort nötig, wo zwei Abdeckungen 12 aneinander stoßen.

Die Figur 6 stellt den Bereich des zweiten Flansches 4 vergrößert dar, und zeigt bevorzugte Ausgestaltungen. Zunächst sind die bereits beschriebenen Merkmale gut zu erkennen: Die Vorsprünge 5, mit denen der zweite Flansch 4 an den Magneten 11 anliegt, die Kante 8, an der die Abdeckung 12 anliegt, sowie der Grat 9 als Stoßstelle zwischen zwei Abdeckungen 12.

Zusätzlich ist gezeigt, dass sich benachbarte zweite Flansche 4 überlappen. Hierzu weisen die zweiten Flansche 4 in einem Überlappungsbereich 13 einander entsprechende Bereiche auf, in den der einzelne Flansch dünner ausgebildet ist, wobei sich die beiden überlappenden Bereiche zu einer Dicke ergänzen, die jeder Flansch auch außerhalb des Überlappungsbereiches 13 aufweist. Durch diese Überlappung kann ein Eindringen von Schmutz zwischen die Magnete 11 besser verhindert werden. Die dargestellte Form der überlappenden Bereiche der zweiten Flansche ist ein Beispiel, andere Formen sind möglich, so zum Beispiel einander entsprechende Abschrägungen oder Nut-und-Feder-Strukturen. Das gezeigte Beispiel hat jedoch den besonderen Vorteil, dass sich der Abstand zwischen den Flanschen 3, 4 einzelner Schutzelemente 1 ändern (insbesondere: vergrößern) kann, ohne dass eine Lücke entsteht. Dies ist bei gekrümmten Magnetbahnen am äußeren Radius von Vorteil.

Die gleiche Überlappung ist natürlich auch für die ersten Flansche 3 vorzusehen.

Die Figur 7 zeigt einen Schnitt durch die Schutzvorrichtung 1, die zwischen zwei Magnete 11 eingesetzt ist. Man erkennt eine Aussparung 15 in Form einer Abschrägung an beiden Seiten des Steges 2, und zwar an dessen dem Magnetträger 10 zugewandten Unterseite. Andere Formen als eine einfache Abschrägung sind ebenso möglich. So wird Platz geschaffen für überschüssigen Kleber 14, der beim Anbringen der Magnete 11 auf dem Träger 10 seitlich der Magnete 11 austritt.

Auf der Oberseite des Steges 2 erkennt man außerdem den Grat 9 und dessen Funktion als definierte Stoßstelle zwischen zwei Abdeckungen 12.

Da sich die beschriebene Schutzvorrichtung 1 nur zwischen zwei Magnete 11 einsetzen lässt, wird für den jeweils ersten bzw. letzten Magnet 11 der Magnetbahn eines Linearmotors ein Endstück 16 vorgeschlagen, wie es in der Figur 8 gezeigt ist. Es sei angemerkt, dass rotatorische Motoren und Linearmotoren mit gekrümmten Bereichen und einer in sich geschlossenen Bahn so ein Endstück 16 selbstverständlich nicht benötigen.

Ein Endstück 16 umschließt die Kanten eines Magneten 11 vollständig, weist also statt einem Steg 2 deren zwei auf. Diese Stege weisen ebenfalls auf den den Magneten 11 zugewandten Seiten erste und zweite federende Elemente 6, 7 auf, sowie einen ersten und zweiten Flansch 3, 4, die jeweils den Nachbarmagnet zum Teil schützen. Auch Überlappungsbereiche 13 mit den benachbarten Schutzvorrichtungen 1 sind vorgesehen.

Die Kanten 8 der Flansche 3, 4 sind auf dem außen liegenden, zusätzlichen Steg 2 fortgesetzt, der den letzten Magnet 11 an der Stirnseite der Magnetbahn schützt, so dass dort eine Abdeckung 12 nach dem letzten Magnet 11 an- und aufliegen kann. Ein Umbiegen der Abdeckung 12 um die Kante des letzten Magneten ist damit überflüssig. Die Abdeckung 12 kann auch nicht verrutschen.

Um ein Verrutschen der Abdeckung 12 noch besser zu vermeiden, können an der Oberseite der Schutzvorrichtungen 1 hier nicht dargestellte Nasen angeformt sein, die in entsprechende Öffnungen der Abdeckung 12 ragen. Allerdings muss der Vorteil der zusätzlichen Fixierung der Abdeckung 12 abgewogen werden mit der damit einhergehenden Verschlechterung des Schutzes der Magneten 11.

## Patentansprüche

1. Sekundärteil eines Synchronmotors mit einer Schutzvorrichtung für Magnete, wobei das Sekundärteil mehrere in regelmäßigen Abständen auf einem Magnetträger (10) angeordnete Magnete (11) aufweist, und wobei die Schutzvorrichtung (1) einen Steg (2) zum Einsetzen in einen Spalt zwischen benachbarte Magnete (11) aufweist, wobei der Steg (2) einen ersten und zweiten Flansch (3, 4) an seinen beiden Enden aufweist, so dass der Steg (2) und die Flansche (3, 4) eine Doppel-T-Struktur bilden, und sich die Flansche (3, 4) an Außenkanten der benachbarten Magnete (11) legen, **dadurch gekennzeichnet, dass** die Schutzvorrichtung (1) aus einem elastischen, komprimierbaren Material besteht, und dass sich die Flansche (3, 4) zweier benachbarter Schutzeinrichtungen (1) berühren und somit einen durchgehenden Schutz vor Beschädigungen durch äußere Einflüsse für die außen liegenden Kanten der Magnete (11) bilden.

2. Sekundärteil nach Anspruch 1, **dadurch gekennzeichnet, dass** der Steg (2) wenigstens ein erstes Federelement (6) aufweist oder selbst als solches wirkt, durch das der Steg (2) im Spalt zwischen den benachbarten Magneten (11) zentriert wird.

3. Sekundärteil nach Anspruch 1 oder 2, **dadurch gekennzeichnet, dass** der erste Flansch (3) ein zweites Federelement (7) aufweist, das die Schutzeinrichtung (1) mit einer Kraft quer zur Magnetbahn auf den Magneten (11) festklemmt und Schwankungen in der Länge der Magnete (11) quer zur Magnetbahn ausgleicht.

4. Sekundärteil nach einem der vorhergehenden Ansprüche, **dadurch gekennzeichnet, dass** der zweite Flansch (4) Vorsprünge (5) aufweist, die definierte Anlagepunkte an Außenkanten der Magnete (11) bilden.

5. Sekundärteil nach einem der vorhergehenden Ansprüche, **dadurch gekennzeichnet, dass** die beiden Flansche (3, 4) jeweils eine Kante (8) aufweisen, die zusammen einen Kanal für die Aufnahme einer Abdeckung (12) der Magnete (11) bilden.

6. Sekundärteil nach einem der vorhergehenden Ansprüche, **dadurch gekennzeichnet, dass** der Steg (2) auf seiner dem Magnetträger (10) abgewandten Oberseite einen Grat (9) aufweist, der als Anschlag für zwei Abdeckungen (12) dient.

7. Sekundärteil nach einem der vorhergehenden Ansprüche, **dadurch gekennzeichnet, dass** sich die Flansche (3, 4) zweier benachbarter Schutzeinrichtungen (1) in einem Überlappungsbereich (13) überlappen.

8. Sekundärteil nach Anspruch 7, **dadurch gekennzeichnet, dass** der Überlappungsbereich (13) so ausgebildet ist, dass sich bei einer Abstandsänderung zwischen den Flanschen (3, 4) keine Lücken bilden.

9. Sekundärteil nach einem der vorhergehenden Ansprüche, **dadurch gekennzeichnet, dass** der Steg (2) auf seiner dem Magnetträger (10) zugewandten Unterseite eine Ausnehmung (15) zur Aufnahme überschüssigen Klebers (14) aufweist.

## Claims

1. Secondary part of a synchronous motor with a protective device for magnets, the secondary part having a plurality of magnets (11) arranged at regular intervals on a magnet carrier (10), and the protective device (1) having a web (2) for insertion into a gap between adjacent magnets (11), the web (2) having a first and second flange (3, 4) at its two ends, so that the web (2) and the flanges (3, 4) form a double-T structure, and the flanges (3, 4) resting on the outer edges of the adjacent magnets (11),
**characterized in that** the protective device (1) consists of an elastic, compressible material, and **in that** the flanges (3, 4) of two adjacent protective devices (1) touch and thus form a continuous protection against damage by external influences for the outer edges of the magnets (11).

2. Secondary part according to Claim 1, **characterized in that** the web (2) has at least one first spring element (6) or acts as such itself, by means of which the web (2) is centred in the gap between the adjacent magnets (11).

3. Secondary part according to Claim 1 or 2, **characterized in that** the first flange (3) has a second spring element (7), which clamps the protective device (1) firmly onto the magnets (11) with a force transverse to the magnetic path and compensates for fluctuations in the length of the magnets (11) transversely with respect to the magnetic path.

4. Secondary part according to one of the preceding claims, **characterized in that** the second flange (4) has protrusions (5), which form defined contact points on the outer edges of the magnets (11).

5. Secondary part according to one of the preceding claims, **characterized in that** the two flanges (3, 4) each have an edge (8), which together form a channel to accommodate a cover (12) of the magnets (11).

6. Secondary part according to one of the preceding claims, **characterized in that**, on its top side facing away from the magnet carrier (10), the web (2) has a ridge (9), which serves as a stop for two covers (12).

7. Secondary part according to one of the preceding claims, **characterized in that** the flanges (3, 4) of two adjacent protective devices (1) overlap in an overlap area (13).

8. Secondary part according to Claim 7, **characterized in that** the overlap area (13) is formed in such a way that, in the event of a change in the spacing between the flanges (3, 4), no gaps are formed.

9. Secondary part according to one of the preceding claims, **characterized in that**, on its underside facing the magnet carrier (10), the web (2) has a recess (15) to accommodate excess adhesive (14).

## Revendications

1. Elément secondaire d'un moteur synchrone doté d'un dispositif de protection pour aimants, dans lequel l'élément secondaire présente plusieurs aimants (11) disposés à distances régulières sur un support d'aimants (10), et dans lequel le dispositif de protection (1) présente une âme (2) à insérer dans une fente entre des aimants voisins (11), dans lequel l'âme (2) présente une première et une deuxième ailes (3, 4) à ses deux extrémités, de telle manière que l'âme (2) et les ailes (3, 4) forment une structure en double T, et que les ailes (3, 4) s'appliquent sur des côtés extérieurs des aimants voisins (11), **caractérisé en ce que** le dispositif de protection (1) se compose d'un matériau élastique compressible, et **en ce que** les ailes (3, 4) de deux dispositifs de protection voisins (1) se touchent et forment ainsi une protection continue contre des dommages dus à des influences extérieures pour les côtés extérieurement situés des aimants (11).

2. Elément secondaire selon la revendication 1, **caractérisé en ce que** l'âme (2) présente au moins un premier élément de ressort (6) ou agit elle-même comme tel, par lequel l'âme (2) est centrée dans la fente entre les aimants voisins (11).

3. Elément secondaire selon la revendication 1 ou 2, **caractérisé en ce que** la première aile (3) présente un deuxième élément de ressort (7), qui serre le dispositif de protection (1) sur les aimants (11) avec une force transversale au banc d'aimants et compense des fluctuations dans la longueur des aimants (11) transversalement au banc d'aimants.

4. Elément secondaire selon l'une quelconque des revendications précédentes, **caractérisé en ce que** la deuxième aile (4) présente des saillies (5), qui forment des points d'appui définis sur des côtés extérieurs des aimants (11).

5. Elément secondaire selon l'une quelconque des revendications précédentes, **caractérisé en ce que** les deux ailes (3, 4) présentent chacune un côté (8), qui forment ensemble un canal pour le logement d'une couverture (12) des aimants (11).

6. Elément secondaire selon l'une quelconque des revendications précédentes, **caractérisé en ce que** l'âme (2) présente sur son côté supérieur détourné du support d'aimants (10) une nervure (9), qui sert de butée pour deux couvertures (12).

7. Elément secondaire selon l'une quelconque des revendications précédentes, **caractérisé en ce que** les ailes (3, 4) de deux dispositifs de protection voisins (1) se recouvrent dans une zone de recouvrement (13).

8. Elément secondaire selon la revendication 7, **caractérisé en ce que** la zone de recouvrement (13) est réalisée de telle manière qu'il ne se forme aucun vide entre les ailes (3, 4) lors d'une variation de distance.

9. Elément secondaire selon l'une quelconque des revendications précédentes, **caractérisé en ce que** l'âme (2) présente sur son côté inférieur tourné vers le support d'aimants (10) un évidement (15) destiné à contenir un excédent de colle (14).
